# EUROPEAN PATENT SPECIFICATION

(11) **EP 3 726 781 B1**
(45) Date of publication and mention of the grant of the patent: **27.10.2021**
(21) Application number: 20166964.5
(22) Date of filing: 31.03.2020
(51) Int. Cl.: H05B 47/195, H04L 12/28

(54) **MAPPING AND COMMISSIONING OF ELECTRICAL DEVICES IN AN AUTOMATED HOME ENVIRONMENT**
ABBILDUNG UND INBETRIEBNAHME VON ELEKTRISCHEN VORRICHTUNGEN IN EINER AUTOMATISIERTEN HEIMUMGEBUNG
MISE EN CORRESPONDANCE ET MISE EN SERVICE DE DISPOSITIFS ÉLECTRIQUES DANS UN ENVIRONNEMENT DOMESTIQUE AUTOMATISÉ

(30) Priority: 19.04.2019 BE 201905264
(43) Date of publication of application: 21.10.2020
(73) Proprietor: Niko NV, 9100 Sint-Niklaas (BE)
(72) Inventor: WILLAERT, Stephane, 2560 Edegem (BE)
(74) Representative: DenK iP bv

(56) References cited:
- US-A1- 2017 339 770
- US-A1- 2019 020 494

## Description

### Field of the invention

The present invention relates to commissioning of electrical devices in an automated home environment. More specifically it relates to methods of installation and commissioning of lighting devices in an automated home environment, to control units programmed to perform such methods, and to such systems.

### Background of the invention

Smart home and smart building technologies are based on the concept of automation and remote control. For example, several functions of the building are automatized, programmable, and/or can be controlled remotely. This improves energy efficiency, comfort, and security. Usually, a programmable control unit stores all the settings of the building, and controls all the slave nodes connected to it, such as electrical devices, e.g. lighting devices, and appliances. In case of smart lighting devices or systems, sensing functions, dimming options and programmed activation and deactivation can be included and controlled by the control unit, which may be also controlled or monitored remotely, e.g. via internet.

Smart home systems often require a high level of expertise and knowledge to fully configure them, including configuring basic on/off behavior of lighting devices. It is often cumbersome and expensive to proceed to a full installation of the smart system technology before the actual works in the building have finished and/or other systems (e.g. telecommunication systems) are enabled. The alternative is not having enabled the lighting system until a late or last step, which is not desirable, because commissioning and tests that the system works properly should be done at an early stage, to avoid later re-works.

Such systems are disclosed , for example, in the prior-art document US 2017/339770 A1 (KIM DUKSUNG [KR] ET AL) 23 November 2017 (2017-11-23), or, alternatively, in US 2019/020494 A1 (ROOSLI PHILIPP [US]) 17 January 2019 (2019-01-17).

Technical support also requires to know the precise configuration in a house or building, so often an installer has to be physically present in the building in order to reconfigure or test the system, which further requires expertise, making the whole process time consuming and expensive.

### Summary of the invention

It is an object of embodiments of the present invention to provide a fast and easy mapping of a lighting system and commissioning of electric devices and more particularly lighting devices in an automated building with no need of complex or lengthy programming of a control unit which controls the lighting system.

In a first aspect, a method of mapping a lighting system including lighting devices is described. The method comprises:
- generating a set of patterns with at least as many different patterns as the number of lighting devices in the plurality thereof,
- assigning each pattern of the set to a unique lighting device of the plurality thereof,
- activating each lighting device in accordance with its assigned pattern, the pattern comprising a sequence of powering pulses,
- sensing modulation of light generated by a lighting device,
- assigning an identifier of the localization of the lighting device to the lighting device of which the modulation of light is sensed,
- storing the assigned identifier as a localization identification of the lighting device of which the modulation of light is sensed, and
- repeating the steps of sensing, assigning and storing for each lighting device.

It is an advantage of embodiments that the assignment of an identifier with a localization can be done for a unique lighting device in an intuitive way, with no need to pre-store the information, for instance in a table. It is a further advantage that, simultaneously, lighting devices are tested for functionality.

A method in accordance with embodiments of the first aspect may further comprise sending the identifier to a control unit and/or to an external database. It is an advantage of embodiments of the present invention that the identifier can be stored in a remote database for remote service and technical support.

In a method in accordance with embodiments of the first aspect, activating each lighting device in accordance with its assigned pattern may comprise activating the lighting device cyclically, in a cycle with a time frame such that the pulses are invisible to the human eye. This avoids flickering, thus mitigating potential risk to light-sensitive users.

In a second aspect, the present invention provides a method of commissioning a lighting system in a house or building by linking a plurality of peripheral interfaces with a plurality of lighting devices in an electrical network. The method comprises mapping the lighting system in accordance with embodiments of the first aspect, and further comprises
- replicating the pattern of a particular lighting device by actuating a peripheral interface to be linked with that particular lighting device, and
- upon detecting actuation of the peripheral interface in accordance with a pattern of the set of patterns, linking the actuated peripheral interface with the lighting device which has that pattern assigned.

It is an advantage of embodiments of the present invention that commissioning of a lighting system can be done easily with no programming knowledge required, and in an early stage of the building.

A method in accordance with embodiments of the present invention may further comprise giving access to an external database to obtain the information of the linked lighting devices and peripheral interfaces. It is an advantage of embodiments of the present invention that, after commissioning, an external service can remotely configure the lighting system.

In a method in accordance with embodiments of the present invention, sensing modulation may be performed by an optical sensor, and detecting actuation of the peripheral interface in accordance with a pattern of the set of pattern may comprise displaying the pattern assigned to the lighting device on a display device, so the pattern can be replicated. The pattern can be clearly displayed in an e.g. output unit, reducing risk of making wrong links (mislabeling).

A method in accordance with embodiments of the present invention may further comprise emitting a perceptible signal when all lighting devices are linked to at least one peripheral interface and/or when all peripheral interfaces are linked to a lighting device. This way, it may be ensured that no lighting device is left without matched interface, so each lighting device is addressable. It is a further advantage that every interface may have functionality. A method in accordance with embodiments of the present invention may for instance comprise turning all lighting devices off when all peripheral interfaces are linked, and/or when all the lighting devices are linked. It is an advantage of embodiments of the present invention that the process automatically ends when each lighting device is linked with at least one interface and/or all interfaces are linked to a lighting device.

In a further aspect, the present invention provides a control unit for commissioning a lighting system including a plurality of lighting devices and a plurality of peripheral interfaces, the control unit having an input port for receiving information. The control unit is programmed to carry out the steps of:
- generating a set of patterns with at least as many different patterns as the number of lighting devices in the plurality thereof,
- assigning each pattern of the set to a unique lighting device of the plurality thereof,
- activating each lighting device in accordance with its assigned pattern, the pattern comprising a sequence of powering pulses,
- receiving information of a sensed measurement of the activated lighting device and a linked identifier of location of that lighting device, and
- storing said identifier as a localization identification of the lighting device.

It is an advantage of embodiments of the present invention that a modular control unit with no need of programming for or during commissioning can be obtained.

The control unit of the present invention further comprises an input port for receiving an input from at least one peripheral interface. The control unit is programmed for, upon detecting actuation of the peripheral interface in accordance with a pattern of the set of patterns, providing a link between the actuated peripheral interface with the lighting device which has that pattern assigned. It is an advantage that the control unit enables commissioning which can be performed easily with no need of having programming knowledge.

A control unit in accordance with embodiments of the present invention may further comprise a connection to an external database for storing at least the identifier as a localization identification of the lighting device, and optionally for allowing the external database to obtain the information of the linked lighting devices and peripheral interfaces. This way, further configuration of the lighting system comprising such control unit can be performed remotely.

In yet another aspect, the present invention provides a lighting system for a house or building, including
- a plurality of lighting devices for emitting continuous light when powered,
- a plurality of peripheral interfaces for actuating the powering of the lighting devices,
- a control unit in accordance with embodiments of the present invention, the control unit being electrically connected to each of the plurality of lighting devices and to each of the plurality of peripheral interfaces.

It is an advantage of embodiments of the present invention that a house or building including such lighting system can be commissioned and can have functioning lights in early building stage.

In a lighting system in accordance with embodiments of the present invention, the peripheral interfaces and/or the lighting devices may be connected to the control unit via wired buses. It is an advantage of embodiments of the present invention that no wireless connection and internet is necessary, e.g. during commissioning.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG 1 illustrates a prior art lighting system without control unit.
FIG 2 illustrates a lighting system with a control unit where the lighting devices are controlled by peripheral interfaces via a control unit.
FIG 3A and FIG 3B is a flowchart including steps and optional steps of a method in accordance with embodiments of the present invention.
FIG 4, FIG 5 and FIG 6 illustrate three alternative patterns implemented as sequences of "off" pulses in accordance with embodiments of the present invention.
FIG 7 illustrates a house with lighting devices in different areas being powered with different pulse trains.
FIG 8 shows an example of commissioning using light flickering and replication of the flickering sequence on a button or switch, in accordance with embodiments of the present invention.
FIG 9 and FIG 10 show an example of commissioning using an application and a mobile device in accordance with embodiments of the present invention.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim.

Furthermore, while some embodiments described herein include some but not other features included in other embodiments, combinations of features of different embodiments are meant to be within the scope of the invention, and form different embodiments, as would be understood by those in the art.

In the description provided herein, numerous specific details are set forth. In other instances, well-known methods, structures and techniques have not been shown in detail in order not to obscure an understanding of this description.

Typically, the electrical network of a building (including lighting devices, switches, and other electric elements) is installed during construction of the building, e.g. the electric connections and wiring are laid out and the lighting devices and switches (or buttons, dimmers and similar peripherals) are connected to the external power line. The network, including the lighting system, needs to be tested and brought to a condition to work, with predetermined minimum requirements (commissioning) before configuring them with the options and functionalities tailored to the preferences of the end user. While commissioning takes place after installing, configuration usually takes place at the last stages of construction or after the construction is finished. The present invention provides commissioning of electrical devices such as lighting devices, before configuring the system, in an automated building or house, in a simple way and in an early stage, including introducing location of the devices in the lighting system (e.g. the type of room where the lighting device is placed), for example immediately after installation.

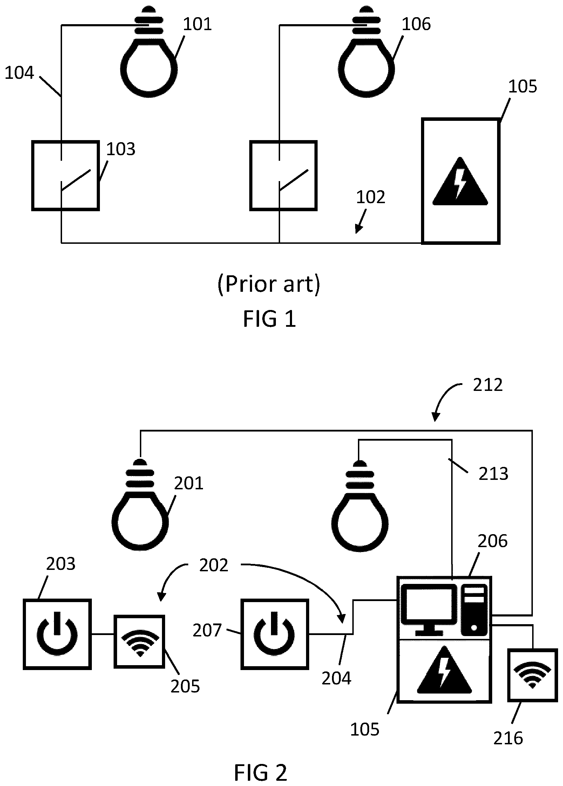

In traditional houses and buildings, and as represented in FIG 1, one or more lighting devices 101 are wired and electrically connected to the electrical network 102 via switches 103 physically installed on power wires 104. The network 102 may be connected to the external network or to a generator via an electrical cabinet 105. The switch 103 opens or shorts the wire 104, turning the lighting devices 101 off or on, respectively. Commissioning of such traditional lighting devices 101 is very simple: the wires 104 should be connected to the switches 103 and the lighting devices 101, and to the electrical cabinet 105. If no mistakes or wrong connections are made, sequentially actuating the switch 103 will turn the corresponding lighting device 101 respectively on and off (or activate and deactivate). Once the switch 103 is linked to a lighting device 101, in order to make changes and provide another or additional, different lighting device responsive to that switch 103, it is necessary to hardwire the switch 103 to the other lighting device 106, which is more complex.

Automated systems, on the other hand, follow a different scheme. An example of such scheme is shown in FIG 2. They usually include peripherals interfaces 203, 207. Where in embodiments of the present invention reference is made to "peripheral interface", or simply "peripheral", reference is made to any actuatable device which can control other device or devices when being actuated. For example it may be a user interface which can turn one or more lighting devices on and off when a user interacts with it. These peripheral interfaces include an input with which a user can interact (in other words, an input that a user can actuate). Thus, the peripheral interface may be simply a button or switch which can power a device, e.g. turn on and off a device. Commissioning can advantageously be applied to standard installations using buttons or switches as peripheral interfaces. However, the present invention is not limited thereto, and it may include dimmers or dimming units, touchscreen switches or the like, as long as they can be actively actuated for at least powering and turning off a device. The peripheral interface may even include a sensor, e.g. a sound or motion sensor, as an input. In such case the peripheral can be actively actuated by sending an appropriate signal to the sensor, e.g. a gesture, voice command or programmed sound, which would allow activating and deactivating a lighting source.

These peripherals send signals via a bus system 202 (which may include data wires 204 and/or a wireless system with e.g. a transceiver 205) upon actuation, to a control unit 206. Further, they include a lighting system with lighting devices 201 that activate according to instructions sent as signals via a power wire, by the control unit 206, which may include also a transceiver or receiver 216. Communication between transceivers 205, 216 may be based on any suitable protocol, e.g. WIFI, radio communication, infrared, Bluetooth, Zigbee, etc. This is different from directly cutting or shorting a power line for allowing current through that wire, as in FIG 1. The link between the lighting devices 201 and the peripherals 203, 207 is not physical, but programmed in the control unit 206. The control unit 206 controls the powering of the lighting devices 201 via a power line network 212, for example via switching and/or dimming units (not pictured) connected to the lighting devices 201 via wires 213. When the passing of current to a lighting device 201 is controlled by the control unit 206, it is said that the lighting device is connected to the control unit 206, because the switching and dimming units may be integral part of the control unit 206, or connected thereto. The power is obtained also from the external network or a generator, e.g. via an electrical cabinet 105 as was described with respect to FIG 1.

The functional link between lighting devices 201 and peripherals 203, 207, programmed in the control unit 206 allows (de)activating the lighting devices 201 by actuating the peripherals.

Compared to the system of FIG 1, if a peripheral interface, e.g. a switch, is linked to a lighting device 201, in order to make another or additional, different lighting device 201 responsive to that peripheral interface, it is necessary to only re-program the control unit 206, which requires less effort than hardwiring as was described with respect to FIG 1.

On the other hand, commissioning is more difficult than in the system of FIG 1. While the link peripheral interface-lighting device 201 can be programmed remotely, this is usually not possible in early stages of construction, because usually the telecommunication system (phone line, internet) is not installed at that point. Optionally, the control unit 206 itself can be programmed in situ, e.g. while laying out the electrical installation of the building, by for example an installer such as an electrician. However, programming usually requires a level of expertise which is out of the scope of what is expected from an installer. This leads to expensive, time consuming and sometimes unreliable commissioning.

The present invention provides a simple and basic, commissioning-level, functionality of the lighting system, in which all the lighting devices 201 can be reliably switched on and off, and all the buttons 203, 207 are responsive, with no need to carry out complex programming, even with no need of knowledge of informatics. Because this can be performed and re-set by an end user, it already allows personalization to some degree, before full-fledged configuration. The commissioning of the lighting system can be done at early stages of building, for example immediately after installation, and before further works such as flooring, evening and wall painting, or installing phone or data lines. This is especially advantageous the case of automated home environments, where the present invention provides a basic functionality of the lighting system in an automated home without the need of modems or other connections to data networks (such as internet), which are rarely installed in early building stages. The basic functionality may allow testing the lighting system early, and the ability of turning on and off the lights may assist in further stages of the building process, such as installing furniture or painting walls or the like, which is usually subject to unreliable sunlight if the lighting system is not operative.

In the present invention, the control unit 206 generates digital patterns, and assigns a different pattern to each lighting device 201 of a plurality of lighting devices 201 present in a home or building. Then the control unit 206 retrieves the plurality of lighting devices 201 in the network. For example, the control unit 206 may be pre-programmed already with the number of lighting devices, e.g. in a lookup table, and the devices are retrieved from a memory. In some embodiments, the control unit 206 may detect all lighting devices 201 in the network. For example, when set into commissioning mode, the control unit 206 may boot up and detect all connected lighting devices 201. It may additionally detect all connected peripheral interfaces 203, 207. For example, the control unit may be programmed to detect how many lighting devices 201 are connected thereto, as well as peripheral interfaces 203, 207. The detection can be made for example by sending signals through each wires 213 of the network 212 (e.g. broadcasting signals) and detecting which wire has a connection to a lighting device, and/or to a peripheral. For example, the bus interface (or output ports where the lighting devices connect the control unit) may be scanned, for instance with or in an analogous way to a "ping" utility. Connected devices respond to the scan typically with their unique address, e.g. a media access control (MAC) address or similar. The connected devices may be the peripheral, and/or the lighting devices (e.g. the controller which is part of the lighting device, e.g. the dimmer or relay connected to the source of light like a LED). Any other existing method of detection of devices connected to the control unit, e.g. connected via buses or the like, could be used.

The control unit 206 is programmed to power each lighting device 201 of the plurality of lighting devices 201 in a specific, unique, way, corresponding to the pattern assigned to the lighting device 201. According to one embodiment, during powering, the installer receives (sees) the pattern assigned to the lighting device 201 as input from the control unit 206, and replicates the assigned pattern by actuating a peripheral interface (e.g. button 203, 207) chosen by the installer, in accordance with that pattern. The control unit 206 then automatically generates the link between the button 203, 207 that was actuated in accordance with the pattern, and the lighting device 201 with the assigned pattern. Only one person is needed, and the process can be done fast. According to other embodiments, e.g. when the pattern is not visible to a human eye, an optical sensor on a portable device, for example, a smartphone, a tablet, a display or the like, receives the pattern and replicates this pattern. Replicating the pattern on the smartphone, tablet, display or the like can be done by the installer, electrician or other user or can be done automatically in an app or program present on the smartphone, tablet, display or the like.

In some embodiments of the present invention, the input is sent to the user through the powering of lighting devices 201 themselves. The control unit 206 powers the lighting devices 201 with a train of pulses following the assigned pattern, as a coded signal, which is visible by the installer. In embodiments of the present invention, the installer senses the train of pulses with a device (e.g. a mobile device, a tablet, a display or the like), the installer assigns, via the portable device, an identifier of the localization of the lighting device, and the device communicates the identifier and the results of the measurement to the control unit 206, which stores the information.

This will further be discussed in detail further in embodiments below.

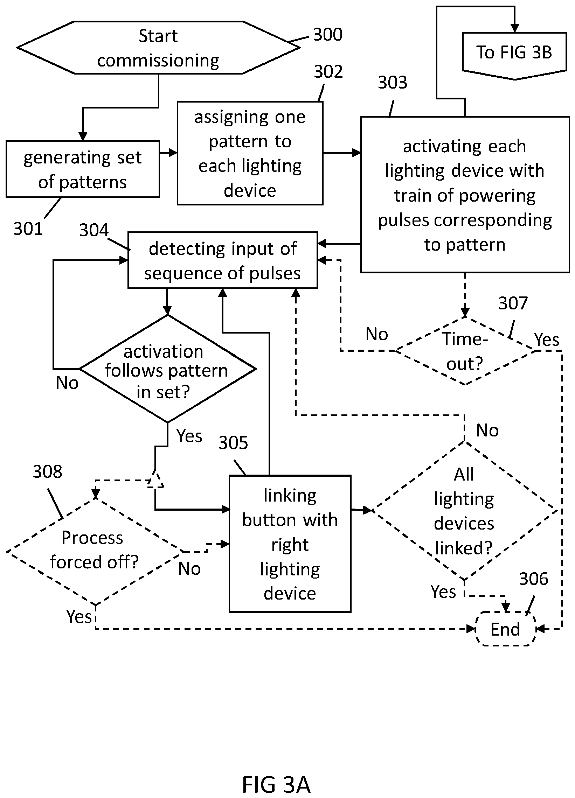

The present invention provides a method of commissioning a lighting system comprising a plurality of lighting devices 201 in a home or building, including identifying and assigning localization of the lighting devices, which may also be referred to as mapping. According to embodiments of the invention, commissioning the lighting system may be done by linking a plurality of lighting devices 201 to at least one peripheral interface, e.g. a button 203, 207, for commissioning functionality to a building or home automation system. The method, outlined in FIG 3A, first comprises starting 300 commissioning, e.g. by putting the control unit 206 in commissioning mode by, for example, pushing a button on that control unit 206. Then, a set of patterns is generated 301. A pattern may comprise a train of successive powering pulses in a particular sequence. Each pattern is unique and differentiates itself from the other patterns of the set. The control unit 206 then detects all lighting devices 201 in the network, and may detect the peripheral interfaces 203 207, as explained earlier. One pattern is then assigned 302 to each of a plurality of lighting devices 201, so that each lighting device 201 has a unique pattern. The control unit 206 then sends the right pattern to the right lighting device 201 to activate 303 it with its pattern . The train of powering pulses used to activate a given lighting device corresponds on a one-to-one basis to the pattern assigned to that lighting device 201. The train of powering pulses may be sent from the control unit 206 to the devices via e.g. the power line network 212, reducing the need of wireless internet network or presence of other wireless protocols.

At that time, when all lighting devices 201 are activated 303 or, in other words have received their assigned pattern, they all start "flickering" according to that assigned pattern. An installer, electrician or other user than walks around the building or house and notices this flickering. The installer may then start the mapping, and according to embodiments of the invention, also make the choice of the peripheral button 203, 207 to be assigned for controlling a particular lighting device 201.

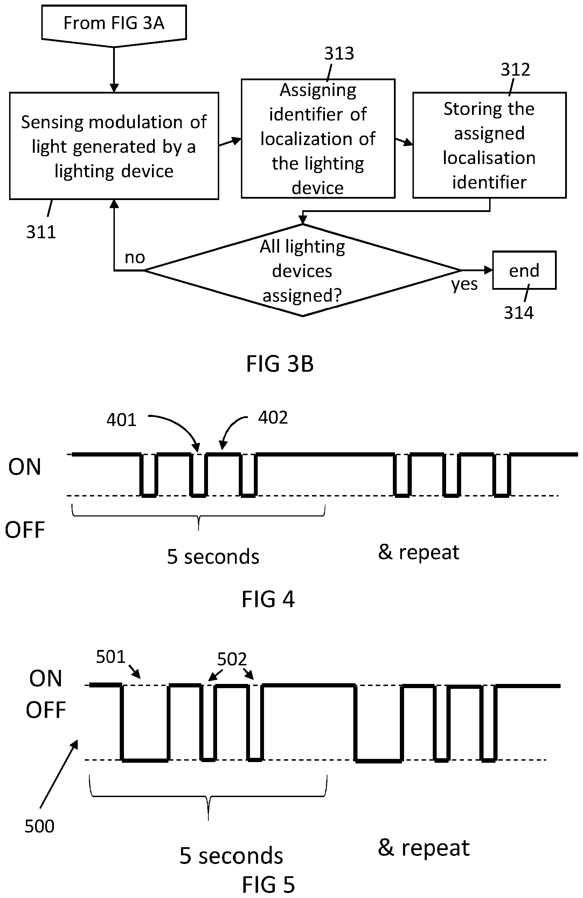

The present invention provides the possibility of labeling the lighting devices in accordance with their localization in the building and/or their function. This mapping is shown in FIG 3A in combination with FIG 3B. After generating 301 the set of patterns and assigning 302 one to each lighting device, activating 303 the lighting devices allows the modulation of light, produced by the train of powering pulses, to be sensed 311 ( by, for example, a sensing element carried by the installer). Once the modulation of light is sensed, the lighting device can be assigned 313 with an identifier of the localization of the lighting device, and this assigned localization identifier can be stored 312. This can be done in parallel with the rest of the commissioning, or at a different moment in time. Once all the devices are assigned a localization identifier, the process can end 314.

According to embodiments of the invention, while mapping the lighting system, or at a different moment in time, the installer determines which peripheral or button 203, 207 is chosen to control a particular lighting device 201. For example, two buttons 203, 207 in a hall next to stairs can be programmed one after another, linking a first button with the lighting device 201 of the present floor where the buttons 203, 207 are situated, and linking a second button 203, 207 with a lighting device 201 of a floor higher up, the sequence of which can be seen through the stairwell (or can be remembered or noted by the installer, electrician or user). A peripheral or button 203, 207 at the upper floor may also be programmed to activate that same lighting device at that floor. Thus, several peripherals 203, 207 (e.g. buttons) may act on same lighting device 201.

After determining which peripheral 203, 207 should control which lighting device 201, the installer, electrician or user then imitates or replicates the flickering pattern of a particular lighting device 201 by actuating the peripheral 203, 207 with which he or she wants to control that particular lighting device 201. Imitation or replication of the flickering pattern should be identical with respect to the number of pulses, the duration of the pulses, the time between two subsequent pulses, and so on.

The control unit 206 then detects 304 the input of sequence of pulses from that button 203, 207 . Detecting 304 the sequence of pulses may include detecting the number of pulses, their relative duration, the timing between the subsequent pulses, etc. For example, in case of patterns with different number of flickerings, the control unit 206 may read how many inputs (or flickering imitations) are introduced in a period of time (for example five seconds), and/or may compare the duration of one pulse with the others within a predetermined range, if the pattern includes short and long pulses. If the detected sequence is recognized by the control unit 206 as being a pulse sequence that was assigned to a lighting device 201, the control unit 206 functionally matches or links 305 the peripheral or button 203, 207 to that lighting device 201 and will assign that button 203, 207 to that lighting device 201. In a next step, in accordance with embodiments of the invention, the established combination lighting device/peripheral or button may be stored in a memory unit.

In accordance with embodiments of the invention, the control unit 206 can give some kind of feedback to the installer, electrician or user to confirm that assignment of the button 203, 207 to the lighting device 201 is finished. This feedback may, for example, be a visual sign such as, for example, stopping the flickering to indicate that the match has been made, or flicker in a different, shorter pattern. In that way, all buttons 203, 207 in the building or house can be assigned to at least one of the plurality of lighting devices 201. The above commissioning process may continue until at least one termination condition takes place, thereby ending 306 the process. Otherwise, the control unit 206 just waits to receive a signal of actuation from a peripheral or button 203, 207.

In embodiments of the present invention, one pattern is generated for each lighting device 201 connected to the network. As described above, this is done by the control unit 206. Thus, each pattern is linked to a single lighting device 201. When all the lighting devices 201 are linked to at least one peripheral or button 203, 207, and optionally all peripherals 203, 207 have been assigned to a lighting device, and thus when advantageously all lighting devices 201 are operable and optionally also all peripherals 203, 207 are operable, the process may automatically end 306. To indicate to the installer or user that the process is ended, again a visual sign or perceptible signal may be given as feedback. This visual sign or perceptible signal may be different from the visual sign for indicating that one lighting device is linked to a button 203, 207. When receiving the visual signal that all lighting devices 201 are linked to at least one button 203, 207, the installer or user may then decide whether he or she still wants to link additional buttons 203, 207 to one or more lighting devices 201 already linked to one other button 203, 207.

Further examples of termination conditions may be (indicated in FIG 3 by the dashed lines):
- a predetermined time passes (time-out) 307, and/or
- a special pattern, preassigned by the control unit 206, is used on any peripheral (e.g. pushing continuously a button during one cycle or more), thus allowing forcing 308 off the process.

According to embodiments of the invention, and especially in case of buildings, such as e.g. factories which have no or only one or a few central peripherals 203, 207, commissioning may comprise sensing the flickering of the lighting devices by means of a sensing element, e.g. an optical sensor on a portable device such as a smartphone, a tablet, a display or the like, carried around by the installer, electrician or other user. The smartphone, tablet, display or the like may then comprise an app or program which is able to make the lighting devices 201 ready for use, i.e. being able to be put on or off, e.g. by pushing a central peripheral or via the electrical cabinet.

In accordance with embodiments of the invention, the length of the pattern assigned to the lighting devices 201 and its type may be chosen in accordance with the number of lighting devices 201 present in the network and thus in the lighting system which need to be programmed. In other words, the length of the pattern and its type may be chosen in accordance with the total number of patterns required to commission all lighting devices 201 in the lighting system. FIGs 4 to 6 illustrate exemplary patterns to be used with embodiments of the present invention. The examples of FIGs 4 to 6 all include three bits or "flickers", and each flicker may include either a long pulse or a short pulse. With three flickers, each flicker having one of two values (e.g. long or short), 2³=8 patterns can be formed, which allows addressing 8 different lighting devices 201. With four flickers, up to 16 lighting devices 201 could be addressed. For commissioning a higher number of lighting devices 201, different patterns can be used, for example similar to a Morse code.

For example, the pattern of FIG 4 includes three OFF pulses 401 of a predetermined duration separated by ON periods 402. The pattern is introduced as a powering sequence following the pattern, by turning off and on the light three times. The sequence may repeat cyclically, for example every 5 seconds. This pattern can be assigned to a lighting device 201. To link the lighting device 201 to a given peripheral or button 203, 207, the installer, electrician, or user actuates the chosen device three times, thereby taking into account the time in between the pulses and the time in between the cycles of three pulses.

In some embodiments, the sequences include OFF pulses of different duration, for example with short pulses (fast flickering) and with long pulses (longer off-periods).

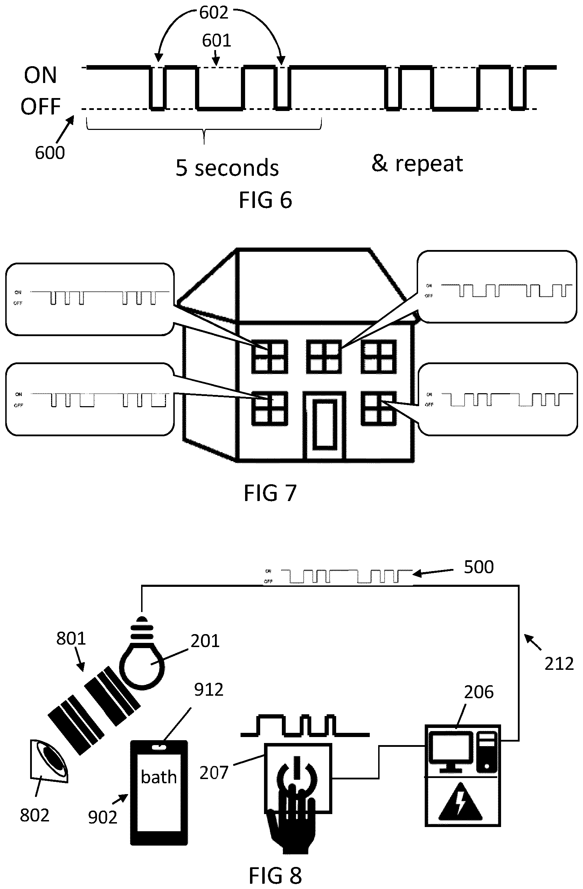

For example, FIG 5 and FIG 6 show two different patterns 500, 600 (which can be assigned to two different lighting devices 201) including a mixture of short and long off periods. The pattern 500 of FIG 5 has a long off period 501 before two short off periods 502, every 5 second cycle. The pattern 600 of FIG 6 shows a long off-period 601 between two flickers or short off periods 602. These patterns repeat every cycle. The long off-period may be for example two or three times longer than a flicker. For example, the flicker may last 0.4 seconds, while the long off-period may last 1.2 seconds. The present invention is not limited by these exemplary periods, and they can be adapted considering the number of lighting devices and the number of patterns needed, so the period may be shorter than 5 seconds if the number of lighting devices is low.

The skilled person could divide a cycle in equal periods of time and apply different on and off sequences, although it is preferred that the patterns can be distinguished by the order of long and short off pulses, where the long pulses have the same duration and the short pulses have the same duration in the cycle, rather than by having to distinguish between short, medium and long pulses. This allows the patterns to be easily replicated by a user: it is easier to actuate a peripheral interface by a sequence of pulses of two different lengths, than actuating a peripheral interface by trying to replicate the duration of a pulse.

In embodiments of the present invention, the cycle leaves a constant period long enough in between cycles so the start of one pattern is not confused with the end of the previous pattern. For example, there may be a 2 or 3 second pause between repetition of cycles (where the lighting device 201 may be preferably on), e.g. in case the cycle lasts 5 seconds, thus ensuring enough break between sequences.

In some embodiments, all the lighting devices 201 in a building are powered by sequences during the commissioning. FIG 7 shows a house in which the lighting devices 201 are powered in accordance with their assigned sequences.

Similar as described earlier, the installer, electrician or user roams around the different rooms and areas of the building, actuating, e.g. by pushing, the peripheral 203, 207 in accordance to, or replicating, the pulse sequence of the lighting devices 201 in the building that needs to be controlled with that peripheral or button 203, 207.

As already mentioned above, in some embodiments, the changes of illumination or the patterns emitted by each of the lighting devices 201, may be detected by a sensor, e.g. a camera of a smart phone, which assists in the process. This is shown in FIG 8, which will be explained to a larger extent below in the examples of commissioning.

The method of mapping shown in FIG 3B can be realized using such sensor. For example, a device 902, e.g. a portable device, e.g. a portable communication device such as a smartphone, a tablet, a display or the like, including a sensor 912 may detect the modulation as the sequence 801 generated by a lighting device 201. The installer 802 assigns 313 an identifier of localization to the lighting device 201 emitting the sensed modulated light (for example, "bathroom" if that is where the lighting device 201 is installed) and stores 312 the assigned localization identifier as a localization identification of the lighting device 201 of which the modulation of light is sensed. The information can be stored 312 locally in the device 902 and afterwards sent to the control unit 206, or it can be sent directly to the control unit 206 via data transmission such as IR, Bluetooth or other preferably wireless ways (if internet is enabled, it may be via wifi).

Additionally, and as already mentioned above, the device 902 can assist in the commissioning and assignment of peripherals 203, 207 or other means of activating the lighting devices 201, such as via the electrical cabinet. For example, the reading from the camera can be sent to a central unit, which then sends the read pattern to a display device, e.g. the display of the smart phone. Alternatively the changes can be read by the sensor, e.g. the camera of a smart phone, and the pattern can be clearly displayed on a display device, e.g. the display of the smart phone, or converted in sound or the like

An advantage is that the pattern can be retrieved in a clear form, reducing the chance of errors. For example it may be retrieved as a pattern of sounds, or as a visual image (for example an image of a point, a line and a point) on the communication device, rather than as a cyclical sequence of on-and-off bursts from the lighting device 201.

In some embodiments, the cycles may be so fast that the human eye does not perceive the off periods. In this case, a photosensor is necessary to detect flickering changes of light. The patterns may be used as before, activating lighting devices in a sequence of pulses, but at high frequency, so the illumination is perceived as continuous.

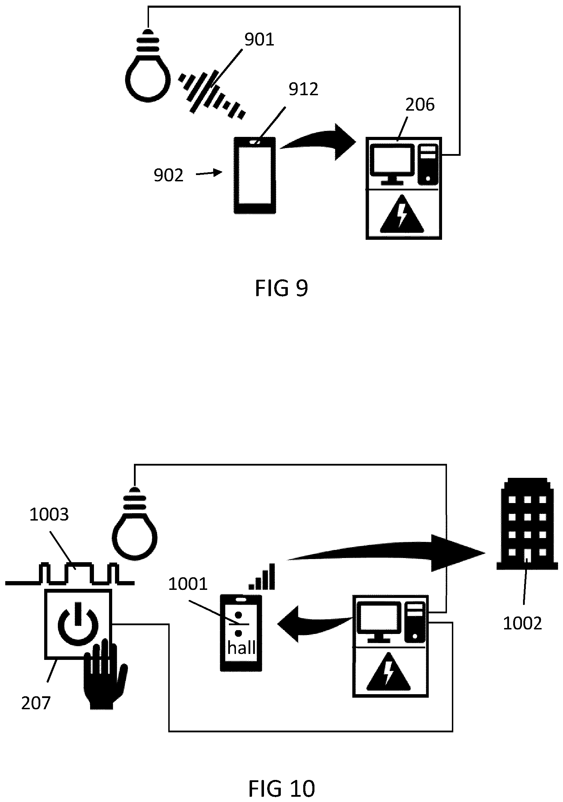

In this case also, as shown in FIG 9 and FIG 10, the sensor 912 of the device 902 can detect the changes and a processor can process the rapid sequence, obtain the pattern, and display the pattern 1001 on a screen which may be part of the device 902, in a clear way, for example as dots and lines, thus allowing the installer to replicate the pattern on one of the peripheral interfaces.

The advantage is that no flickering of lights is seen during the method, which is advantageous in case other people are doing different jobs in the same room as where the installer or electrician is mapping and commissioning the lighting devices 201 or in case the installer or people present in the building are light sensitive.

In some embodiments, the method not only includes generating a set of patterns and assigning one pattern to each lighting device 201, but it further includes generating a unique pulse train (or train of pulses) 901 per pattern assigned to each lighting device, and activating the corresponding lighting device with the pulse with a temporal scheme, for example repeated cyclically in a time frame such that it is indiscernible to the eye. The method further comprises detecting the powering pulses with a sensor 912 as before, and retrieving a pattern (for example, sending the result of the detection to the control unit 206 and obtaining the pattern from the control unit, or retrieving the pattern from a database, the database being used also by the control unit). Then, the installer can actuate the peripheral following the retrieved pattern. In some embodiments, the pulse train is not visible to the human eye.

A further advantage is that the sensor 912 can be integrated in a communication device 902, e.g. a smartphone. Data communication between the control unit 206 and the communication device 902 may be wireless, for example via infrared, radio communication (e.g. Bluetooth communication), etc., so the control unit does not need to be connected to an external data network. The communication device may also allow sending information of the distribution of the lighting devices in the building to a central, e.g. external, database. Additionally, the address of the building can be obtained (e.g. by geolocation, GPS systems, etc. in the communication device) and sent to the central database. The information can then be used to continue or even finalize the configuration of the lighting system remotely, once the building or at least the control unit is connected to a data network (e.g. a MAN, WAN, or in general, the internet) and the information in the database can be matched with the information in the central unit.

That information in the central unit can be, for example a floor plan of the house or building in which the lighting system is present and thus in which the lighting devices are to be commissioned. In that case, an installer, electrician or user is still walking around and actuating, e.g. pushing, the buttons according to a sequence imitating the pattern of the lighting device the button has to be linked with. However, the installer, electrician or user can indicate on the floor plan on his smartphone or tablet in which room he is at the moment he is actuating, e.g. pushing, the button. This information can be stored (e.g. in the cloud) and later, when the commissioning is finished, the information can be combined, e.g. on a computer or a laptop, so as to link the commissioned lighting devices with their location. This method enables the possibility of remote technical servicing, because the need of an expert to be physically in the building for reconfiguration or testing is reduced.

In a further aspect, the present invention provides a program which, when run in a control unit 206, it is capable of performing steps of the method of the first aspect. In particular, the program can generate a set of unique and differentiating patterns and assign each pattern to one of a plurality of lighting devices 201. It can also link or match each lighting device 201 to at least one peripheral interface or button 203, 207, when the peripheral interface is actuated following the pattern assigned to the lighting device 201.

In some embodiments, the present invention provides a pattern for each address representing a lighting device, the addresses being stored in a memory.

The control unit, via an input, detects actuations done on a peripheral interface, e.g. pushing of a button. In some embodiments of the present invention, the algorithm includes instructions for discerning short actuation from long actuation of a peripheral interface with a predetermined or adaptable tolerance. For example, it can compare one pulse with another and consider that they are the same if the difference of actuation is within a fault tolerance programmed in the control unit. The program may also obtain all the addresses of the lighting devices 201 and prepare the pattern in accordance with the number of lighting devices 201. The program may also obtain all address of the peripheral interfaces.

The program may include instructions to emit a signal or execute an action when a lighting device 201 is linked to at least one peripheral interface or button 203, 207. The program may further include instructions to emit a further signal or execute an action when all lighting devices 201 are linked to at least one peripheral 203, 207. The actions may include stop the flickering, turning the lighting devices off, emitting an acoustic signal, sending a message to a communication device, etc. Preferably, the signal for indicating that all lighting devices 201 are linked to at least one peripheral 203, 207 may be different from the signal indicating that one lighting device is linked to a peripheral 203, 207. For example, the program may include instructions to stop flickering the lighting devices 201 for a few cycles, to signalize that all the lighting devices 201 have been linked, and then to continue the process (resume flickering) if there are still peripherals that need to be linked. When all lighting devices 201 are linked to at least one peripheral 203, 207 an installer, electrician or other user can decide to link at least one lighting device 201 to a further peripheral 203, 207. Then, when all lighting devices 201 are linked to all required peripherals 203, 207, the program may include instructions to take further action, e.g. to turn off the lighting devices 201 and/or to emit an acoustic signal, or in general to emit a further perceptible. This way, it is ensured that all lighting devices 201 are linked to at least one peripheral 203, 207.

The program may be implemented as software in a control unit 206. In some embodiments, the present invention includes two programs implemented in software in a control unit 206 and in a communication device 902, respectively, the programs being able to communicate with each other through the communication device 902. The control unit 206 may store data received from the communication device 902, and link information from the communication device 902 (e.g. identifiers of a lighting device) with information generated and received by the control unit 206 (e.g. information related to the pattern of a lighting device and/or any peripheral linked to the lighting device). For example, an application for a mobile device such as a smartphone may include a program in accordance with embodiments of the present invention.

The program in the communication device 902 may include instructions to access a sensor 912 in the device 902 and sense the illumination pattern of the lighting devices 201, and to send the detected sequence to an output of the communication unit, or decode the sequence and send the resulting pattern to the control unit 206. Alternatively, the sequence may be sent to the control unit 206 for decoding, which may require slower transmission and/or decoding but requires less processing power on the side of the communication device 902. The output of the communication unit, for outputting information received from the control unit (such as a pattern) may be a display, or an acoustic output or the like.

In a further aspect, the present invention provides a control unit 206, e.g. a controller, including the program of the present invention. The control unit 206 may be included in the building, and it may adapted to control powering lines, for example by including or by controlling switches, dimmers or the like connected to a power line of a lighting device 201. The control unit 206 is adapted also to receive signals from peripherals 203, 207, in a wired way, or wirelessly. For example, the control unit 206 may include inputs from the peripherals 203, 207. It does not need external connection to a data network in order to execute the program. The control unit 206 may be also adapted to receive information of a sensed measurement of the activated lighting device and a linked identifier of location of that lighting device, e.g. an input from the portable device. An advantage of a central control unit 206 in accordance with embodiments of the present invention is that the commissioning can be performed, so all lighting devices 201 and peripherals 203, 207 in a building have at least a required basic functionality (they all can be used and can turn on and off), without need of having established a connection to a remote unit, or to internet. However, the present invention is not limited to an in-situ central control unit 206 of the building or house, and it may have external connection to a data network or be connectable thereto, e.g. to internet, e.g. it may include a remote control. The control unit may include lookup tables, memory, a processing unit and such.

The control unit 206 may include means to manually start the process, and optionally to interrupt it. This way, it can be reset at any time, e.g. if redecoration or redistribution of the building or house is needed, or in case of change of inhabitant or proprietor. This can be done advantageously easily with no need of rewiring, even by the end user.

In a further aspect, the present invention provides a lighting system including a control unit 206 in accordance with embodiments of an aspect of the present invention, further including a plurality of lighting devices 201 being connected to elements directly controlled by, or integral to, the control unit 206. The control unit (following instructions received from peripherals 203, 207) directly regulates the powering of the lighting unit by controlling these elements.

The power may be obtained from a generator, or from an external network. Fuses, connections to buses, and power lines, etc. may also be provided. The control unit 206 may be included in or connected to an electrical cabinet 105, to connect the external network (or generator) to the power network of the house or building.

In some embodiments, the lighting devices 201 may be adapted to provide a modulation of illumination (e.g. a burst of pulses or the like) at a frequency such that the modulation cannot be perceived directly by the human eye. For example, the lighting devices 201 may be adapted to provide sequences of 90 pulses per second, or higher, for example 400 pulses per second, or 2000 pulses per second Such speeds are barely noticeable or unnoticeable by the human eye. For example, the lighting devices may be LEDs. However, the present invention is not limited to these lighting devices, and incandescent bulbs, low-energy bulbs, halogen bulbs, and the like can be used.

The system may further include a plurality of peripheral interfaces 203, 207. These are connected to the control unit 206 via communication protocols, e.g. via data buses, via wireless connection, etc. Input and output for the buses, and transmitters, receivers and/or transceivers can be included to enable this communication.

In embodiments of the present invention, every lighting device 201 connected to the control unit 206 can be linked to at least one peripheral interface 203, 207. This way, after the commissioning, each lighting device 201 can be turned on and off, and each peripheral interface can have a function.

The peripheral interfaces 203, 207 may include buttons, switches, knobs, digital or tactile sensors, motion sensors, photoelectric sensors, etc., in general any actuatable device which can be used to actively send a signal to the control unit.

The control unit 206 may be pre-programmed, and all devices (lighting devices 201 and peripheral interfaces 203, 207) connected to the control unit 206 may be identified and/or programmed and stored in a memory, so no device is left without a function.

The present invention provides an easy way of commissioning a lighting system comprising a plurality of lighting devices 201, by matching each lighting device 201 (e.g. lamp) with at least one chosen peripheral interface 203, 207(e.g. button), by actuating the chosen peripheral interface 203, 207 in accordance with a sequence of pulses emitted by the lighting device 201.

In what follows, examples of commissioning are explained.

An example of commissioning is shown in FIG 8, where only one lighting device 201 is shown. It gives a basic and easily reconfigurable functionality to the lighting devices and peripheral interfaces at an early stage of the building. The control unit 206 assigns a pattern to each lighting device, which in the case of the shown lighting device 201 may be for example the pattern 500 of FIG 5 (including a long off period followed by two short off periods). The control unit introduces the pattern 500 as a powering sequence through the power line network 212, the powering sequence being an off long period followed by two short off periods, separated by on periods (which preferably have the same duration, to avoid excessive complexity in the sequences and lighting control). The sequence may repeat cyclically, leaving the lighting device on for few seconds in order to indicate where the sequence starts, as explained with reference to FIG 5. The installer 802 sees the lighting device 201 turning on and off cyclically with sequence 801 "long off - flicker - flicker" (or, more accurately, "long on - long off - on - short off - on - short off - long on"). The installer decides which peripheral interface 207 (e.g. button) will be assigned to the lighting device 201, and performs a first long pressing followed by two short pressing of the button 207. The control unit 206 detects and identifies the sequence 500 pressed in that particular button, and establishes the link between the button 207 and the lighting device 201, keeping it in an internal memory, thus enabling a basic control of the lighting device 201 through the button 207. The sequence 801 is also detected by the sensing element 912 of the portable device 902 of the installer. The program in the device 902 may prompt the installer to identify (assign 313 an identifier of) the localization and store 312 it, either in the control unit 206 (if ready communication exists between the device 902 and the control unit 206) or in the memory of the portable device 902 itself. This information may later be sent to the control unit 206 or even to an external database. The information of the identifier of the lighting device 201 can be linked with the information of the pattern assigned exclusively to that lighting device in the control unit 206. In other words, the control unit 206 may receive two inputs: one related to the peripheral 203, 207 that should be linked to the lighting device 201, and another related to the identifier (e.g. name of the location) of the lighting device 201. Both inputs may be determined in both cases by the pattern assigned to the lighting device 201. Thus, the lighting device 201 can be functionally linked to at least one peripheral 203, 207 chosen by the installer, and it can also be identified by the localization introduced by the installer.

The installer can move to a different lighting device 201 and/or peripheral interface 203, 207 and repeat the operation until all the lighting devices 201 of the building are functional and can be turned on and off and their locations are identified. Optionally, all the peripheral interfaces 203, 207 of the building can be made functional (thus, each of them can turn on or off a lighting device 201). This can be done by one installer only, and it can be done as soon as the wiring, peripheral interfaces, lighting devices 201, and control unit 206 are installed and connected to the power network, with no need of any data network connection, wireless connection, wi-fi signal, modems or the like.

Another example of commissioning is shown in FIG 9 and FIG 10. A train of pulses 901, not detectable by the human eye, are produced in a particular room. The installer enters with a portable device, e.g. a smartphone 902 running an application in accordance with embodiments of the present invention. The sensor 912 of the smartphone detects the train of pulses 901, and either decrypts the train and sends the results to a control unit 206, or sends the results of the detection directly to the control unit 206 for decryption. The control unit 206 matches the train of pulses 901 with the pattern assigned to it, and, as shown in FIG 10, sends the pattern in an easy and readable form 1001 (e.g. dot-line-dot) to the smartphone 902 for display. The installer can also, as described above, specify which room corresponds to the identified lighting device 201, by assigning an identifier to it (e.g. the hall). The installer introduces de pattern 1001 by actuating the chosen peripheral interface 207 in accordance with a sequence 1003 following the pattern 1001 (short actuation-long actuation-short actuation).

In an alternative embodiments, the train of pulses 901 may be detectable by the human eye, but the installer may still make use of the portable device 902 to retrieve the pattern in the display of the portable device 902 from the control unit 206, allowing more complex patterns to be used by the control unit 206, which can still provide an easy and readable form of reading the pattern. This reduces the chance of making errors.

The information of the identification of the room and the pattern assigned to it can be sent (e.g. from the smartphone) to the control unit 206, and/or via internet to an external database 1002, as well as the situation and address of the house, for example localized by the smartphone via GPS. Alternatively, the information of the identification can be locally stored in the smartphone and downloaded later to the control unit 206 and/or the database 1002.

The smartphone may be any other device such as a tablet, a dedicated device or the like, or in general a device with a light sensor, an interface for allowing the installer to assign identifiers (e.g. a physical or virtual keyboard, allowing great freedom for assigning identifiers), an optional sensory output such as a display, data connection (wireless, or wired, e.g. via a port) with the control unit 206 and, optionally, with an external database, and appropriate software.

In a later building stage, when the control unit 206 has access to external networks (for example when the building is connected to data lines such as phone lines or fiber-optic communication providing connection to e.g. internet), it can link all the information of the external database 1002 (address, the lighting devices 201 linked to peripheral interfaces 203, 207 and the identification of rooms where the lighting devices 201 are installed) with the information stored in the control unit 206. Thus, the configuration of the lighting system, with all the user preferences, or at least part thereof can be finished remotely, from a central unit with access to the database 1002 and to the control unit 206. Additionally, this allows an external support center to obtain information of the lighting system configuration for technical support or the like, with no need to send a specialist to the physical lighting system (e.g. the house with such system). If at any point, a reconfiguration is necessary, this can be done by a user by simply starting commissioning again, or remotely by the technical service if required.

In summary, in some embodiments the present invention allows commissioning of a building by linking manually each lighting device with at least one peripheral. A control unit assigns a different pattern to each lighting device and links each lighting device with the peripheral that has been activated in accordance with the corresponding pattern. The information is stored directly in the control unit.

The invention includes mapping where a portable device is used to detect information from a lighting device regarding the pattern associated to the lighting device. The device allows assigning an identification (e.g. room) so the lighting device, so both the information of the pattern and its identification information (label) are stored.

The identification information can be retrieved later by the control unit, e.g. once the control unit is connected to the internet. This way, the control unit can combine the identification information (location) of each lighting device with the previously stored link between each lighting device and its peripheral. The internet access of the control unit may also allow external remote reprogramming and diagnostics by an installation service with no need of displacement of an installer to the building requiring service.

## Claims

1. A method of commissioning and mapping a lighting system including a plurality of lighting devices (201), the method comprising:
- generating (301) a set of patterns with at least as many different patterns as the number of lighting devices (201) in the plurality thereof,
- detecting the plurality of lighting devices (201),
- assigning (302) each pattern of the set to a unique lighting device (201) of the plurality thereof,
- activating (303) each lighting device (201) in accordance with its assigned pattern, the pattern comprising a sequence of powering pulses,
- sensing (311) modulation of light generated by a lighting device (201),
- assigning (313) an identifier of the localization of the lighting device to the lighting device of which the modulation of light is sensed,
- storing (312) the assigned identifier as a localization identification of the lighting device of which the modulation of light is sensed,
- repeating the steps of sensing, assigning and storing for each lighting device (201), further comprising linking each lighting device (201) with at least one of a plurality of peripheral interfaces (203, 207) in an electrical network, by:
- replicating the pattern of a particular lighting device (201) by actuating a peripheral interface (203, 207) to be linked with that particular lighting device (201), and
- upon detecting (304) actuation of the peripheral interface (203, 207) in accordance with a pattern of the set of patterns, linking (305) the actuated peripheral interface (203, 207) with the lighting device (201) which has that pattern assigned.

2. The method of the previous claim, further comprising sending the identifier to a control unit (206) and/or to an external database (1002).

3. The method of any one of the previous claims, wherein activating each lighting device in accordance with its assigned pattern comprises activating (323) the lighting device cyclically, in a cycle with a time frame such that the pulses are invisible to the human eye.

4. The method of any one of the previous claims, further comprising giving access to an external database (1002) to obtain the information of the linked lighting devices (201) and peripheral interfaces (203, 207).

5. The method of any one of the previous claims,
- wherein sensing modulation is performed by an optical sensor, and
- wherein detecting actuation of the peripheral interface in accordance with a pattern of the set of pattern comprises displaying the pattern assigned to the lighting device on a display device, so the pattern can be replicated.

6. The method of any one of the previous claims, further comprising emitting a perceptible signal when all lighting devices (201) are linked to at least one peripheral interface (203, 207) and/or all peripheral interfaces (203, 207) are linked to a lighting device (201).

7. The method of claim 6, comprising turning all lighting devices (201) off when all peripheral interfaces are linked, and/or all the lighting devices are linked.

8. A control unit (206) for commissioning a lighting system including a plurality of lighting devices (201), the control unit (206) having an input port for receiving information, the control unit (206) programmed to carry out the steps of:
- generating (301) a set of patterns with at least as many different patterns as the number of lighting devices (201) in the plurality thereof,
- assigning (302) each pattern of the set to a unique lighting device (201) of the plurality thereof,
- activating (303) each lighting device (201) in accordance with its assigned pattern, the pattern comprising a sequence of powering pulses,
- receiving information of a sensed measurement of the activated lighting device and a linked identifier of location of that lighting device,
- storing said identifier as a localization identification of the lighting device,
further comprising an input port for receiving an input from at least one peripheral interface (203, 207), the control unit being programmed for, upon detecting (304) actuation of the peripheral interface (203, 207) in accordance with a pattern of the set of patterns, providing a link between the actuated peripheral interface (203, 207) with the lighting device (201) which has that pattern assigned.

9. The control unit (206) of claim 8, further comprising a connection to an external database (1002) for storing at least the identifier as a localization identification of the lighting device, and optionally for allowing the external database (1002) to obtain the information of the linked lighting devices (201) and peripheral interfaces (203, 207).

10. A lighting system for a house or building, including
- a plurality of lighting devices (201) for emitting continuous light when powered,
- a plurality of peripheral interfaces (203, 207) for actuating the powering of the lighting devices (201),
- a control unit (206) in accordance with any one of claim 8 or 9, the control unit (206) being electrically connected to each of the plurality of lighting devices (201) and to each of the plurality of peripheral interfaces (203, 207).

11. The lighting system of claim 10, wherein the peripheral interfaces (203, 207) and/or the lighting devices (201) are connected to the control unit (206) via wired buses (204).

## Patentansprüche

1. Verfahren zum Inbetriebnehmen und Zuordnen eines Beleuchtungssystems, das mehrere Beleuchtungsvorrichtungen (201) beinhaltet, wobei das Verfahren umfasst:
- Erzeugen (301) eines Mustersatzes mit wenigstens so vielen verschiedenen Mustern wie die Anzahl von Beleuchtungsvorrichtungen (201) in den mehreren davon,
- Erkennen der mehreren Beleuchtungsvorrichtungen (201),
- Zuweisen (302) jedes Musters des Satzes zu einer einzigartigen Beleuchtungsvorrichtung (201) aus den mehreren davon,
- Aktivieren (303) jeder Beleuchtungsvorrichtung (201) gemäß ihrem zugewiesenen Muster, wobei das Muster eine Sequenz von Stromimpulsen umfasst,
- Erfassen (311) einer Lichtmodulation, die durch eine Beleuchtungsvorrichtung (201) erzeugt wird,
- Zuweisen (313) eines Bezeichners der Lokalisierung der Beleuchtungsvorrichtung zu der Beleuchtungsvorrichtung, von der die Lichtmodulation erfasst wird,
- Speichern (312) des zugewiesenen Bezeichners als eine Lokalisierungsbezeichnung der Beleuchtungsvorrichtung, von der die Lichtmodulation erfasst wird,
- Wiederholen der Schritte des Erfassens, des Zuordnens und des Speicherns für jede Beleuchtungsvorrichtung (201), das ferner ein Verknüpfen jeder Beleuchtungsvorrichtung (201) mit wenigstens einer von mehreren peripheren Schnittstellen (203, 207) in einem elektrischen Netzwerk umfasst, durch Folgendes:
- Replizieren des Musters einer bestimmten Beleuchtungsvorrichtung (201) durch Betätigen einer peripheren Schnittstelle (203, 207), die mit dieser bestimmten Beleuchtungsvorrichtung (201) verknüpft werden soll, und
- nach dem Erkennen (304) einer Betätigung der peripheren Schnittstelle (203, 207) gemäß einem Muster des Mustersatzes, Verknüpfen (305) der betätigten peripheren Schnittstelle (203, 207) mit der Beleuchtungsvorrichtung (201), der dieses Muster zugewiesen wurde.

2. Verfahren nach dem vorhergehenden Anspruch, das ferner ein Senden des Bezeichners an eine Steuereinheit (206) und/oder an eine externe Datenbank (1002) umfasst.

3. Verfahren nach einem der vorhergehenden Ansprüche, wobei das Aktivieren jeder Beleuchtungsvorrichtung gemäß ihrem zugewiesenen Muster das zyklische Aktivieren (323) der Beleuchtungsvorrichtung in einem Zyklus mit einem Zeitrahmen derart umfasst, dass die Impulse für das menschliche Auge unsichtbar sind.

4. Verfahren nach einem der vorhergehenden Ansprüche, das ferner ein Gewähren eines Zugriffs an eine externe Datenbank (1002) umfasst, um die Informationen der verknüpften Beleuchtungsvorrichtungen (201) und peripheren Schnittstellen (203, 207) zu erhalten.

5. Verfahren nach einem der vorhergehenden Ansprüche,
- wobei die Erfassungsmodulation durch einen optischen Sensor durchgeführt wird, und
- wobei das Erkennen der Betätigung der peripheren Schnittstelle gemäß einem Muster des Mustersatzes ein Anzeigen des Musters, das der Beleuchtungsvorrichtung zugewiesen ist, auf einer Anzeigevorrichtung umfasst, so dass das Muster repliziert werden kann.

6. Verfahren nach einem der vorhergehenden Ansprüche, das ferner ein Emittieren eines wahrnehmbaren Signals umfasst, wenn alle Beleuchtungsvorrichtungen (201) mit wenigstens einer peripheren Schnittstelle (203, 207) verknüpft sind und/oder alle peripheren Schnittstellen (203, 207) mit einer Beleuchtungsvorrichtung (201) verknüpft sind.

7. Verfahren nach Anspruch 6, das ein Ausschalten aller Beleuchtungsvorrichtungen (201) umfasst, wenn alle peripheren Schnittstellen verknüpft sind und/oder alle Beleuchtungsvorrichtungen verknüpft sind.

8. Steuereinheit (206) zum Inbetriebnehmen eines Beleuchtungssystems, das mehrere Beleuchtungsvorrichtungen (201) beinhaltet, wobei die Steuereinheit (206) einen Eingangsport zum Empfangen von Informationen aufweist, die Steuereinheit (206) programmiert ist, um folgende Schritte auszuführen:
- Erzeugen (301) eines Mustersatzes mit wenigstens so vielen verschiedenen Mustern wie die Anzahl von Beleuchtungsvorrichtungen (201) in den mehreren davon,
- Zuweisen (302) jedes Musters des Satzes zu einer einzigartigen Beleuchtungsvorrichtung (201) aus den mehreren davon,
- Aktivieren (303) jeder Beleuchtungsvorrichtung (201) gemäß ihrem zugewiesenen Muster, wobei das Muster eine Sequenz von Stromimpulsen umfasst,
- Empfangen von Informationen einer erfassten Messung der aktivierten Beleuchtungsvorrichtung und eines verknüpften Bezeichners des Ortes der Beleuchtungsvorrichtung,
- Speichern des Bezeichners als eine Lokalisierungsbezeichnung der Beleuchtungsvorrichtung, die ferner einen Eingangsport zum Empfangen einer Eingabe von wenigstens einer peripheren Schnittstelle (203, 207) umfasst, wobei die Steuereinheit, beim Erkennen (304) der Betätigung der peripheren Schnittstelle (203, 207) gemäß einem Muster des Mustersatzes, zum Bereitstellen einer Verknüpfung zwischen der betätigten peripheren Schnittstelle (203, 207) mit der Beleuchtungsvorrichtung (201) programmiert ist, der dieses Muster zugewiesen wurde.

9. Steuereinheit (206) nach Anspruch 8, die ferner eine Verbindung mit einer externen Datenbank (1002) zum Speichern wenigstens des Bezeichners als eine Lokalisierungsbezeichnung der Beleuchtungsvorrichtung und optional zum Ermöglichen, dass die externe Datenbank (1002) Informationen der verknüpften Beleuchtungsvorrichtungen (201) und peripheren Schnittstellen (203, 207) erhalten kann, umfasst.

10. Beleuchtungssystem für ein Haus oder ein Gebäude, das Folgendes beinhaltet:
- mehrere Beleuchtungsvorrichtungen (201) zum Emittieren von kontinuierlichem Licht, wenn sie mit Strom versorgt werden,
- mehrere periphere Schnittstellen (203, 207) zum Betätigen der Stromversorgung der Beleuchtungsvorrichtungen (201),
- eine Steuereinheit (206) nach einem der Ansprüche 8 oder 9, wobei die Steuereinheit (206) mit jeder der mehreren Beleuchtungsvorrichtungen (201) und jeder der mehreren peripheren Schnittstellen (203, 207) elektrisch verbunden ist.

11. Beleuchtungssystem nach Anspruch 10, wobei die peripheren Schnittstellen (203, 207) und/oder die Beleuchtungsvorrichtungen (201) über verdrahtete Busse (204) mit der Steuereinheit (206) verbunden sind.

## Revendications

1. Procédé de mise en service et de cartographie d'un système d'éclairage comportant une pluralité de dispositifs d'éclairage (201), le procédé comprenant :
- la génération (301) d'un ensemble de motifs avec au moins autant de motifs différents que le nombre de dispositifs d'éclairage (201) dans la pluralité de ceux-ci,
- la détection de la pluralité de dispositifs d'éclairage (201),
- l'attribution (302) de chaque motif de l'ensemble à un dispositif d'éclairage unique (201) parmi la pluralité de ceux-ci,
- l'activation (303) de chaque dispositif d'éclairage (201) en fonction de son motif attribué, le motif comprenant une séquence d'impulsions d'alimentation,
- détection (311) de la modulation de la lumière générée par un dispositif d'éclairage (201),
- l'attribution (313) d'un identifiant de la localisation du dispositif d'éclairage au dispositif d'éclairage dont la modulation de la lumière est détectée,
- la mémorisation (312) de l'identifiant attribué en tant qu'identification de localisation du dispositif d'éclairage dont la modulation de la lumière est détectée,
- la répétition des étapes de détection, d'attribution et de mémorisation pour chaque dispositif d'éclairage (201), comprenant en outre la liaison de chaque dispositif d'éclairage (201) avec au moins une interface parmi une pluralité d'interfaces périphériques (203, 207) dans un réseau électrique, en :
- la reproduction du motif d'un dispositif d'éclairage particulier (201) par l'actionnement d'une interface périphérique (203, 207) devant être relié à ce dispositif d'éclairage particulier (201) et
- lors de la détection (304) de l'actionnement de l'interface périphérique (203, 207) conformément à un motif de l'ensemble de motifs, la liaison (305) de l'interface périphérique actionnée (203, 207) au dispositif d'éclairage (201) auquel est attribué ce motif.

2. Procédé selon la revendication précédente, comprenant en outre l'envoi de l'identifiant à une unité de commande (206) et/ou à une base de données externe (1002).

3. Procédé selon l'une quelconque des revendications précédentes, dans lequel l'activation de chaque dispositif d'éclairage conformément au motif qui lui a été attribué comprend l'activation (323) du dispositif d'éclairage de manière cyclique, dans un cycle avec un intervalle de temps tel que les impulsions sont invisibles à l'œil humain.

4. Procédé selon l'une quelconque des revendications précédentes, comprenant en outre le fait de donner accès à une base de données externe (1002) pour obtenir les informations des dispositifs d'éclairage liés (201) et des interfaces périphériques (203, 207).

5. Procédé selon l'une quelconque des revendications précédentes,
- dans lequel la détection de la modulation est effectuée par un capteur optique
- et dans lequel la détection de l'actionnement de l'interface périphérique conformément à un motif de l'ensemble de motifs comprend l'affichage du motif attribué au dispositif d'éclairage sur un dispositif d'affichage, pour que le motif puisse être reproduit.

6. Procédé selon l'une quelconque des revendications précédentes, comprenant en outre l'émission d'un signal perceptible lorsque tous les dispositifs d'éclairage (201) sont liés à au moins une interface périphérique (203, 207) et/ou que toutes les interfaces périphériques (203, 207) sont liées à un dispositif d'éclairage (201).

7. Procédé selon la revendication 6, comprenant la désactivation de tous les dispositifs d'éclairage (201) lorsque toutes les interfaces périphériques sont liées et/ou que tous les dispositifs d'éclairage sont liés.

8. Unité de commande (206) destinée à la mise en service d'un système d'éclairage comportant une pluralité de dispositifs d'éclairage (201), l'unité de commande (206) ayant un port d'entrée permettant de recevoir des informations et l'unité de commande (206) étant programmée pour réaliser les étapes suivantes :
- la génération (301) d'un ensemble de motifs avec au moins autant de motifs différents que le nombre de dispositifs d'éclairage (201) dans la pluralité de ceux-ci,
- l'attribution (302) de chaque motif de l'ensemble à un dispositif d'éclairage unique (201) parmi la pluralité de ceux-ci,
- l'activation (303) de chaque dispositif d'éclairage (201) en fonction de son motif attribué, le motif comprenant une séquence d'impulsions d'alimentation,
- la réception des informations sur une mesure détectée du dispositif d'éclairage activé et un identifiant lié d'emplacement de ce dispositif d'éclairage,
- la mémorisation dudit identifiant comme identification de localisation du dispositif d'éclairage, comprenant en outre un port d'entrée permettant de recevoir une entrée d'au moins une interface périphérique (203, 207), l'unité de commande étant programmée pour, lors de la détection (304) de l'actionnement de l'interface périphérique (203, 207) conformément à un motif d'un ensemble de motifs, assurer un lien entre l'interface périphérique actionnée (203, 207) avec le dispositif d'éclairage (201) auquel ce motif est attribué.

9. Unité de commande (206) selon la revendication 8, comprenant en outre une connexion à une base de données externe (1002), permettant de mémoriser au moins l'identifiant en tant qu'identification de localisation du dispositif d'éclairage, et permettant éventuellement à la base de données externe (1002) d'obtenir les informations des dispositifs d'éclairage (201) reliés et des interfaces périphériques (203, 207).

10. Système d'éclairage destiné à une maison ou un bâtiment, comportant
- une pluralité de dispositifs d'éclairage (201) destinés à émettre une lumière continue lorsqu'ils sont alimentés,
- une pluralité d'interfaces périphériques (203, 207) permettant d'actionner l'alimentation des dispositifs d'éclairage (201),
- une unité de commande (206) selon l'une quelconque des revendications 8 ou 9, l'unité de commande (206) étant connectée électriquement à chacun des dispositifs de la pluralité de dispositifs d'éclairage (201) et à chaque interface de la pluralité d'interfaces périphériques (203, 207).

11. Système d'éclairage selon la revendication 10, dans lequel les interfaces périphériques (203, 207) et/ou les dispositifs d'éclairage (201) sont connectés à l'unité de commande (206) par l'intermédiaire de bus filaires (204).
